# EUROPEAN PATENT SPECIFICATION

(11) **EP 3 283 287 B1**
(45) Date of publication and mention of the grant of the patent: **03.03.2021**
(21) Application number: 16717124.8
(22) Date of filing: 14.04.2016
(51) Int. Cl.: B32B 5/08, B32B 5/02, B32B 5/18, B32B 5/24, B32B 5/26, B32B 7/12, B32B 27/12, B32B 5/28, B32B 27/06, B32B 27/08, B32B 27/32, B32B 27/34, B32B 27/36, B32B 27/40, B32B 3/26

(54) **AESTHETIC MULTILAYER SURFACE MATERIAL FOR THE ENGINE BAY AREA**
MEHRSCHICHTIGES ÄSTHETISCHES OBERFLÄCHENMATERIAL FÜR DEN MOTORRAUMBEREICH
MATÉRIAU DE SURFACE MULTICOUCHE ESTHÉTIQUE POUR LE COMPARTIMENT MOTEUR

(30) Priority: 15.04.2015 EP 15163756
(43) Date of publication of application: 21.02.2018
(73) Proprietor: Autoneum Management AG, 8406 Winterthur (CH)
(72) Inventor: MÜLLER, Christian, 8400 Winterthur (CH); DELMAS, Bertrand, 8406 Winterthur (CH)
(86) International application number: PCT/EP2016/058233
(87) International publication number: WO 2016/166217

(56) References cited:
- FR-A1- 2 830 880
- US-A1- 2003 129 359
- US-A1- 2014 144 722
- US-B1- 6 528 437

## Description

### Technical Field

The present invention is directed to a trim part or cladding for the engine bay area with a surface material, and the method of producing such a trim part.

### Background Art

It is known to use cladding or trim parts in the engine bay area for covering surfaces to attenuate noise. Examples of such trim part or cladding are in particularly engine mounted cladding or trim parts as well as, cladding mounted to the oil pan, water tank or around the battery pack. Most of these parts are visible to the end-consumer and might have an aesthetic component.

State of the art trim parts, for in particularly covering the engine, are made from injection moulded plastic. These parts are heavy and the amount of freedom to design is limited due to the material properties.

A small amount of engine cover trim parts on the market are made of for instance a fibrous material containing glass fibers and may be covered with nonwoven or textile, to enable the demoulding during production and or enhance the acoustic performance of the part, rather than to enhance the visual appearance. The problem of such part is the penetration of the fine glass fibers through the covering material giving rise to skin irritation to the person handling the part. In addition, the glass fibers can be seen on the surface causing a visual defect.

For interior trim parts a wider choice of materials is available. However most of the aesthetic materials available for interior trim parts would fail the high thermal load conditions around the engine and the power train as well as would deteriorate quickly as an effect of the conditions given, in particularly temperature, humidity and all types of dirt and grease.

US6528437 is disclosing a composite fabric well suited for vehicle headliner fabric that is comprised of a warp knitted, flame resistant fabric and a flame resistant extruded film, the two layers being heat laminated, to overcome any lamination problems with additional foam layers.

It is therefore the object of the current invention to further optimise an engine cover or other claddings in the engine bay area, in particularly to enhance the visual appearance without impairing the acoustic and other requirements of the part.

### Summary of invention

The object is achieved by the engine bay trim part according to claim 1 and the method of producing such a trim part with such a multilayer surface material.

Engine bay trim part or cladding comprising at least a carrier layer made of an acoustic porous material, consisting of a consolidated fibrous material consisting of fibres and a binder in the form of a thermoplastic binder or a thermoset binder, whereby the binder forms small binding points between the fibers to consolidate the fibrous material and whereby the fibres are at least one of thermoplastic fibers, preferably polyester fibers, preferably polyethylene-terephthalate (PET) or polybutylene terephthalate (PBT), and whereby it further comprises a multilayer surface material consisting of 2 layers with a first outer layer being an open structured textile fabric and a second layer being a polymeric film layer superposed and laminated together such that the film layer is visible through the open structure of the textile layer laminated on at least one outer surface of the trim part such that the open textile fabric forms the most outer layer of the trim part, characterised in that at least part of the fibers used are thermoplastic self-crimped fibers, preferably conjugate fibers, more preferably hollow conjugate fibers.

In a first embodiment the multilayer surface material for covering a surface of an engine bay component according to the invention, consist of 2 layers with a first outer layer being an open structured textile and a second layer being a polymeric film layer whereby the outer layer is superposed straight on the film layer and laminated together such that the film layer is visible through the open structure of the textile layer.

The film layer may function as a binder layer for the textile layer and the engine trim part to be covered. Preferably the film and surface layer are laminated together such that the film material can soften to at least a tacky state and can be pressed in the open hole or pore structure of the textile layer. Thereby giving rise to a surface appearance that is no longer monotone as the film will break the visual appearance of the textile. This effect can be further enhanced by a colour difference between the layers and/ or by the level of glossiness of the film used.

Surprisingly the effect of the film is already visual with a fabric with small holes and a high percentage of covering surface, as the film has a profound effect on light reflection. Preferably the average hole size of the open structure in the textile is between 50 and 2000µm, preferably between 50 and 700µm. The hole size of the open structure in the textile is at least such that it does not have a relevant effect on the airflow resistance of the overall part. Furthermore, the hole size can be chosen such that small dirt particles will not be trapped in the open spaces in fabric structure. A further advantage is that the film may avoid dirt particles from migrating into the carrier layer below.

An additional advantage for using the film directly under the open structured textile is that glass fibers no longer can penetrate the outer surface enhancing health risks related to touching glass fibers as well as further enhancing the optical appearance of the part.

Preferably the film in combination with the production process is chosen such that the film is not melting to a flowing state as this would provoke a bleeding to the surface of the fabric thereby engulfing the textile material entirely; this would cause a local alteration in the appearance and is not wanted.

Preferably the film layer has a thickness of between 20 and 150µm, more preferably between 25 and 80µm . If the film is too thick it might no longer bulge in the open spaces of the fabric and the lamination of the textile and the film might be impaired with the risk of peeling during handling and use.

Furthermore, the film must be such that it can stretch during the moulding of the trim part including the multilayer surface material according to the invention without tearing.

Preferably the film in the multilayer surface material according to the invention is thermoplastic polyurethane (TPU). The TPU film is understood not to be foamed. This film has the advantage that it will not disintegrate during the moulding of the engine bay trim part. Furthermore, if the film is perforated, the perforation will stay largely in its original state, without increasing or decreasing the hole size substantially. In addition, the film has a good isotropic stretch ability, making it an ideal film for deep drawn or variable three dimensional shapes.

The thermoplastic polyurethane is preferably based on polyester or polyether. To further improve the mould ability of the product as well as to increase the resistivity against oil, preferably the film is based on polyester-polyol.

Preferably the TPU film has a melting range of at least above 140°C measured according to ISO 11357, preferably between 150 and 170°C.

Preferably the film is at least partially perforated. Such an at least partial perforation may enable the absorption of noise by the underlying layers.

According to a preferred development, the perforation of the film layer comprises, at least in sections, a perforation density of more than 150,000 holes/m², preferably more than 200,000 holes/m². Preferably the perforation density is less than 750,000 holes/m². Increasing or decreasing the holes/m² may help tuning the overall acoustic performance of the part.

The film may be perforated by any method known to the skilled person, for instance by using hot needles.

According to a preferred development, the at least partial perforation of the film layer, comprises holes the cross sectional area of which corresponds to essentially cylindrical holes with a diameter between 10 and 1000µm. The preferred development may offer the advantage that the sound absorption of the exterior trim part is improved.

Preferably the average diameter of the perforations of the film is smaller than the alleged average diameter of the holes in the open structured textile fabric.

Surprisingly the use of a textile layer in combination with the film layer enables a less soiling surface, easier to clean when needed. Furthermore, it decreases the penetration of dirt insight the trim part. As the fabric material is materially connected to the underlying film layer, the yarn or the fibers of the yarn are fixed and cannot move. Therefore, the surface becomes surprisingly more stable during use in particularly and including harsh cleaning conditions, like high pressure water jet cleaning and brushes. As the material of the fabric as well as the combination with the film may be water-repellent the covered trim part will quickly dry when wet.

In particular, the use of the textile layer together with an at least partially perforated foil layer may show a stable acoustic attenuation over a longer time span as soiling of the perforations in the film is less likely. The textile prevents the dirt on the surface from being pushed in the perforation of the film during handling and cleaning.

Preferably the textile layer has an average fabric cover factor of between 60 and 99%. The structural openness of a fabric may be defined using the cover factor. The cover factor is a ratio of the fabric area covered by the yarn to the total fabric area. It is typically regarded as a measure of openness, in the form of looseness or tightness of the structure and may be measured using image analysis, providing a quantitative (%) of surface covered with the actual fabric structure. For instance, using the digital microscope VHX-5000 and the accompanied analyses software of the company Keyence. The computer material is able to calculate the percentage of coverage by the fabric or alternatively the percentage not covered by the fabric as well as the size of the holes. For the fabric on its own it can be measured with through light, while on the part it can be measured with light from above.

Surprisingly already with a very high cover factor of 98-99% light can shine through, hence an effect of the film might be visible.

The preferred fabrics have an air flow resistance that is minimal, less than 200 N.s.m⁻³, hence the fabric is not an air flow resistance layer in itself. The AFR measured does normally not correlate with the cover factor.

The AFR is measured according to current ISO 9053, using the direct airflow method (method A).

Preferably those types of fabrics are used that have a preferred cover factor due to the way they are produced, rather than due to a mechanical action like punching or perforation. The advantage is that the yarn material is not impaired so there is less chance of fraying of the surface during the use and handling of the cover, in particularly during cleaning of the cover.

Preferably the textile layer is either one of a knitted or woven fabric. Different types of knits, patterns or textures, for instance circular, warp, pique, interlock or jacquard as well as 3 dimensional types of knits might be used. The variety of knit textures together with the film gives the possibility to obtain a customised solution depending on car and producer. In addition, the knit influences the haptic of the surface and can be adapted by the choice of the knit as well as the fineness of the fabric. Also the choice of the yarn for the knit as well as the yarn type - sleek or textured - has an influence on the apparent openness of the fabric.

Woven fabric with an open type of weave can be used comparable with the knits. Also for woven fabrics the variety of weave as well as the choice of the fineness of the yarn and the yarn type -sleek or textured- together with the film influences the haptic of the surface as well as the visual appearance.

To increase the overall stretch performance, the fabric might comprise elastic yarn or yarn made of elastic fibers. The textile fabric may comprise elastic yarn such that the fabric is stretchable in all direction of the plane in approximately equal amounts. In particularly for woven fabrics this might be an advantage.

More in general for those trim parts that have a more structured 3 dimensional shape stretchable in one or more direction of the plane might enable a smoother following of the surface to be covered and or might also give a preferred surface patterning effect. A further possibility to customise and enhance the overall visual appearance of the trim part to be covered.

Preferably the textile layer has an area weight of between 50 and 400 g/m², preferably between 65 and 150 g/m².

Preferably the textile layer is made from a thermoplastic material. The material chosen may have a melting temperature of at least above 220°C Above this temperature the fabric will not lose its structure and integrity during the production of the part or during use. Preferably polyester is used, preferably at least one of Polyethylene-terephthalate (PET) or Polybutylene-terephthalate (PBT) is used.

Engine bay trim part, panel or cladding for covering a surface in the engine bay area according to the invention, comprising the multilayer surface material laminated on at least one exterior face of the trim part, with the textile fabric layer being the most outward surface layer. Principle no other layers should be put on top of the textile fabric layer as this would obscure the aesthetical effect wanted.

Possible surfaces in the engine bay area can be either a surface of the main body of the vehicle as well as a surface of one of the components usually placed in the engine bay area, like the engine and powertrain, the battery, oil pan cooling unit, the bonnet inner-surface etc. However, it can also be a surface cover for the full engine bay area covering all engine bay components, either detached to the bonnet or as a separate panel.

The at least one surface of the trim part covered with the multilayer surface material is preferably the surface facing away from the surface of the vehicle or one of its components to be covered, preferably visible by a person opening the engine bay area for instance for regular maintenance. Preferably surfaces to be covered are engine covers, including the engine top cover, battery or oil pan covers, the hood liner, as well as panels to span and cover the engine bay area itself etc.

The engine bay trim part comprises at least a carrier layer made of an acoustic porous material being a fibrous layer. The carrier layer is defined as the layer giving substantially the structural stiffness to the part. Other layers might enhance it but are not the main contributor to the structural stiffness of the part.

If the carrier layer is a fibrous layer preferably it comprises at least of fibers and a thermoplastic or thermoset binder, whereby the binder forms small binding points between the fibers.

As a thermoplastic binder either a copolymer of polyester, or polyamide, preferably polyamide 6 or polyamide 66 can be used. Preferably the binder is in the form of fibres, flakes or powder, whereby fibers are best to obtain a more homogenous mixture with the other fibers.

Alternative a thermoset binder can be used for instance a resinous type of material like phenolic resin.

The fibers are at least one of thermoplastic fibers, for instance polyester fibers, like polyethylene-terephthalate. The fibers might comprise at least one of natural fibers, like flax or cotton or mineral fibers, like glass fibers, ceramic fibers, carbon or basalt fibers or a combination of those fibers. It can also be a mixture of such fibers, for instance a mixture of polyester and glass fibers. The fibers can be staple fibers or endless filaments.

At least part of the thermoplastic fibers used are self-crimped fibers, preferably conjugate fibers, more preferably hollow conjugate fibers. Preferably self-crimped fibers eventually combined with other fibers, for instance non self-crimped thermoplastic fibers, glass fibers and or cotton fibers.

Self-crimped fibres are fibres with two components arranged such that one component has a shrinking behaviour different from the other component and thereby induce a shaping of the filament away from the straight line, for instance in the form of spiral, omega or helical. However, in most cases the shape is not necessarily a regular structure: irregular 3 dimensionally shaped versions are having the same advantage. In self-crimped fibers the crimp is permanent. A pre-requisite for self-crimping is a certain crimping potential created by differences in shrinkage, shrinking power and module of elasticity of the two components in the fiber.

A mechanical crimp might be used to further enhance the fiber crimp and the shape formed, for instance by including a stuffer box treatment or a saw tooth gear treatment.

Self-crimped fibers differ from mechanical crimped fibers in a way that they obtain the crimping capacity during the spinning of the fiber as an intrinsic feature of the fiber, hence the self-crimping is permanent. This intrinsic self-crimp is less likely to be lost during further production process steps or later use of the material, preferably it might be reinstated during process steps when necessary.

Preferably the self-crimped fibres have an overall round cross section, more preferably with a hollow core, also known as hollow conjugate fibers. However, other cross-sections known in the art to make conjugate self-crimped fibers can be used as well.

Surprisingly the use of self-crimped fibers further improves the durability of the carrier layer with regard to the resistance of the layer to vibrations, in particularly at the area of connection of mounting means to the carrier layer. It was further found that the attenuation of noise in the low frequency range was at least equal or better as materials that are dampened with an additional elastomeric decoupling in their mounting means. This is in particularly interesting for parts that are directly mounted to vehicle structures with a high level of vibrational energy like the engine or the power train as well as in certain cases the bonnet. Or structures that are connected via the main often steel body of the car, which is a good conductor for vibrational noise.

The self-crimped fiber used in the carrier layer of the trim part according to the invention is preferably a side by side conjugate fiber. Preferably the conjugate material is chosen such that there is a difference in viscosity causing an inherent permanent self-crimping in the fibre. However other types of conjugate fibers that show a self-crimping as defined might be chosen as well.

Preferably, the self-crimped fibers are made of one or a combination of polyester and or its copolymers, for instance polyethylene terephthalate or polybutylene terephthalate.

All polymers used for either the binder fibers, thermoplastic fibers or the crimped fibers can be virgin or coming from recycled and/or regenerated resources, as long as the material requirements are given. Also the natural fibers for instance the cotton fibers can be either virgin or used from a reclaimed source, for instance as a shoddy cotton.

The use of the crimped fibers in the blend of either the carrier layer and or an additional fibrous absorbing layer (later discussed in more detail) further enhances the acoustic performance.

The two components should be distributed in the filament string such that a difference in shrinkage in the length of the filament is given. The maximum crimp may be developed when the fibers are comprised of equal parts of each component and the components were separated and located on opposite sides of the fiber.

The staple fibre length of self-crimped fibers used is preferably between 32 and 76 mm. The fiber is preferably between 2 and 20 dtex, more preferably between 2 and 10 dtex.

Overall the use of the self-crimped fibers enhances the evenness of the material layer obtained by for instance air lay methods or more preferred carding methods. The natural tendency of the self-crimped fibers to go back to a random curled form gives the fibers an additional resilience. The permanency of the crimp prevents the loss of the crimp during processing.

If the carrier is a fibrous layer, the area weight of the layer may be between 200 and 1700 g/m², preferably between 400 and 1500g/m².

An examples of possible fibre compositions is (% given are % by weight):
- Glass fibers mixed with polyamide binder fibers whereby the binder fibers will melt and form bonding points between the glass fibers. Preferably a mixture of between 55 and 80% of glass fibers and between 45 and 20% of Polyamide binder fibers are used. The glass fibers might be at least partially replaced by other filler fibers like polyester fibers, for instance PET or PBT. Preferably the self-crimped polyester hollow conjugate fibers are used to at least partially replace the glass fibers.

Surprisingly the replacement of the glass fibers at least partially with self-crimped fibers eventually combined with standard polyester fibers and or cotton fibre showed a better vibrational damping at least at the compressed areas where mounting means are connected to the carrier layer.

This has the further advantage that the trim part can use mounting means without a decoupling element also on vibrating surfaces without increasing vibrational noise

Other examples of possible fibre compositions are (% given are % by weight):
- Glass fibers mixed with a thermoset binder, like for instance a glass fiber mat (also called glass wool) with 10-20%, preferably 15% phenolic resin. The glass fibers might be partly replaced by filler fibers like cotton and/or polyester, preferably with self-crimped fibers, for instance 15-20% phenolic resin, 0-30% cotton or 0-30% polyester or 0-30% self-crimped polyester fibre, and 50-60% glass fibers.

Alternatively, a fibrous solution without glass fibers might be chosen, for instance a mixture of PET and polyamide fibers whereby the polyamide fibers will melt and form bonding points between the PET fibers. Preferably the part is moulded under direct contact with water saturated steam under pressure whereby the apparent melting point of the polyamide is decreased under its melting temperature as measured with differential scanning calorimetry (DSC). So the melting temperature of the PET can be at least 240°C. By using this method the polyester fibers will not melt and stay a fibrous network in the carrier material, keeping the noise absorbing character of a fibrous layer. Preferably the PET fibers are at least partly replaced with crimped polyester fibers and or cotton fibers.

Preferably thermoplastic fibers including a flame retardant agent in the polymer are used.

In another embodiment the engine trim part with a fibrous carrier layer and the multilayer surface material according to the invention further comprises a embedded logo press-moulded for instance during the production of the trim part, whereby the carrier layer is locally further compressed to form a desired logo either as positive imprint, whereby the area around the logo is further compressed such that the logo stands out or as a negative whereby the logo itself is further compressed. The multilayer surface material according to the invention in combination with the carrier material makes these types of logos possible to produce in the same process step as the moulding of the full part, without the need for additional materials or process steps.

The later addition of logos on top of the multilayer surface material is alternatively possible. These logos may be made of any type of suitable plastic able to withstand high temperatures and that can be glued to the surface. Alternatively, the logos can have a protrusion on the back, which slots in the carrier layer through a small gap and can be welded to the back for instance using an ultra sound welding device.

Another alternative is using transfer prints on the outer layer, for instance using preprinted logos or decoration, that can be transferred to the surface for instance as a decal.

In another preferred embodiment the engine bay part with the carrier layer and the multilayer surface material according to the invention further comprises an additional absorbing layer, in the form of either a fibrous layer or an open cell foam layer. For this layer the same type of materials as disclosed for the carrier layer can be used. However, as this layer is not functioning as a carrier layer, the density and or stiffness of this layer is less than for the carrier layer. The density for the foam may be between 10 and 35 kg/m³, for instance a slab stock material with a density of between 12 and 20 kg/m³. The area weight of the layer in the final product can in addition be set using different thicknesses of the slab stock material, preferably between 5 and 50mm. The final thickness of the absorbing layer in the part is variable and depending on the design of the part, usually between 1 and 20mm, whereby the lower thickness is in the area of the rim and mounting while the thick areas is in the areas related to absorbing noise.

The thickness of the absorbing layer > the thickness of the carrier layer, in the areas related to absorbing noise, preferably the carrier layer is between 2 and 10 mm and the thickness of the absorbing layer is between 8 and 30 mm.

In the area of the rim and or the mounting, the thickness for both layer can be as low as 1-2 mm enabling a good connection to the mounting means.

The additional absorbing layer can be placed between the multilayer surface material and the carrier layer or underneath the carrier layer in the direction facing the surface of the vehicle component to be covered.

An example of a trim part according to the invention is build up as follows: A multilayer surface material with a knitted fabric and a thermoplastic polyurethane perforated film is laminated to an additional absorbing layer in the form of a semi-rigid open cell polyurethane layer and at the opposing site of the absorbing layer, the fibrous carrier layer made of glass fibers bound with polyamide fibers as binder material is laminated to the absorbing layer. Preferably this layer is covered with a thin nonwoven layer, only for preventing the layer from sticking to the mould.

Another example of a trim part according to the invention is build up as follows: A multilayer surface material with a knitted fabric and a thermoplastic polyurethane perforated film is laminated to a fibrous carrier layer made of glass fibers bound with polyamide fibers as binder material, and at the opposing site of the carrier layer, an additional absorbing layer in the form of a semi-rigid open cell polyurethane layer is used. Preferably this layer is covered with a thin nonwoven layer, for preventing the layer from sticking to the mould and for protecting the foam layer during handling of the part.

The thermoplastic polyurethane (TPU) layer of the covering material may also serve as an adhesive layer for laminating the fabric layer to the carrier material or the additional absorbing layer without the need for an additional adhesive layer between these two layers. In case of the carrier layer being the preferred layer of glass fibers and polyamide binder there is also no need for an additional adhesive layer. However, it might be necessary in certain material combination that an additional adhesive layer is needed.

The difference between such a normal adhesive layer and the use of TPU or perforated TPU is that during moulding at high temperature the TPU does not disintegrate substantially, it stays in the form of a film.

While state of the art film materials used, like polyolefin films for instance, will melt and form droplets which are wicked in the surrounding layers. Therefore, the integrity of the material of the state of the art as a film is impaired and later on the film is not recognisable as such anymore.

In another preferred solution the engine bay part with the carrier layer and the multilayer surface material according to the invention and an additional absorbing layer placed either between the multilayer surface material and the carrier layer or underneath the carrier, further comprises a second film placed between the carrier and the additional absorbing layer to further enhance the acoustic properties of the multilayer cladding. Whereby all layers are laminated to the adjacent layers during forming of the final trim part.

In another preferred embodiment the second film is at least partially opened up such that the opened up area or areas have an air flow resistance (AFR). Preferably the AFR measured over the thickness of the final part after forming is in the range of between 500 and 4000 Nsm⁻³.

Although this opening of the film forming micro holes can be done by perforation comparable with the first film layer, it might also happen during the moulding treatment preferably with steam moulding. The film will become slightly porous, thereby obtaining an AFR over the part of between 1500 and 4000 N.s.m⁻³. This will further enhance the acoustic attenuation in particularly the insulating properties of the overall part.

Preferably the second film layer can be one of polyamide (PA), for instance PA 6 or PA66, polyester, PET or PBT or a copolymer of polyester, a polyolefin, like polyethylene (PE) or polypropylene (PP) or thermoplastic polyurethane (TPU), preferably the ester or ether based version. The second film layer may also be formed by a bilayer or multilayer film preferably a combination of the materials just mentioned, for instance PA6/PE or a copolymer of polyester (CoPES)/TPU.

TPU is preferred, as it is durable under a high thermal load. Preferably the TPU film has a melting range of at least above 140°C measured according to ISO 11357, preferably between 150 and 170°C.

Preferably the second film layer has a thickness of between approximately 25 and 120µm, preferably between 50 and 100µm.

In a further embodiment the production of the trim part with the multilayer surface material according to the invention is given.

A mould comprising of 2 mould halves together forming a cavity with the desired 3 D shape of the trim part is used to produce the trim part according to the invention. The 3D shape might mean that the gap between both moulding surfaces is variable such that the product has a variable thickness, hence a variable density in the direction of the plain of the part.

In one mould half the desired materials is stacked in the correct layering is put in position, for instance the carrier material, the film and the outer fabric layer. The other optional layers might be included as deemed necessary.

The mould is closed and the materials are consolidated and/or the layers laminated to adjacent layers to form the final part. Preferably the moulding is done with pressure and direct steam preferably using saturated steam. Preferably also the compression of the carrier layer to obtain the desired stiffness is done in the same step.

The part formed can have a variable density and or thickness in the direction of the plane of the part. The site covered by the multilayer surface material according to the invention might have a surface structure in the form of for instance indents and/or rounded curves to emphasis or enhance the design optic of the surface cover, preferably including moulded logos. While the site facing the vehicle surface to be covered, can have a contour adapted to follow the surface to be covered.

Alternatively, the material can be heated before the moulding step, followed by a hot or cold moulding step.

In the following the invention will be further explained as well as additional preferred embodiments disclosed. These further disclosed preferred solutions might also be used in combination with the embodiments already described.

### Figures and further embodiments

Figure 1 shows an example of a woven texture.
Figure 2, 3 and 4 show examples of knit textures.
Figure 5 shows an example of an engine cover according to the state of the art.
Figure 6 shows an example for an engine cover with logo according to the invention.
Figure 7 to 10 show preferred examples of material layouts according to the invention.

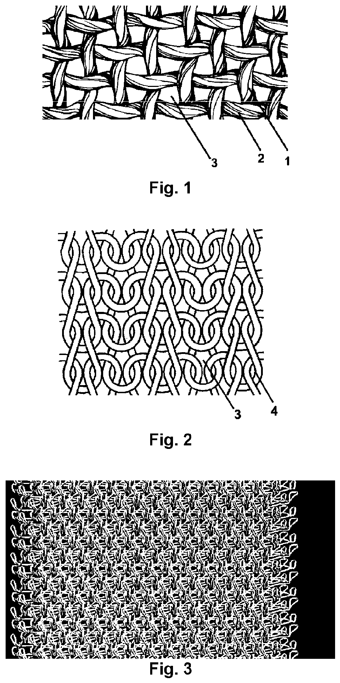

For the multilayer surface material according to the invention preferably an open structured textile fabric for instance a woven or knitted fabric can be used. In figures 1 to 4 examples of such fabrics are given.

In figure 1 for instance a plain woven fabric with warp (1) and weft (2) treads are given. Between these treads small holes (3) are defining the openness of the weave. The openness of the structure of a woven fabric is characterized by the thickness of the threads (judged by thread density, that is, by the weight in grams of 1 km of thread), by the type of interlacing of threads, by the density of the weave, by the ratio of the flexure of the warp and weft threads, and by the surface structure (smooth or napped). In particularly a difference between warp and weft can further enhance the openness and or the overall aesthetic appearance of the multilayer surface material.

In figure 2 and 3 examples of knitted fabric are given. The openness of a knit fabric may be influenced by the knitting machine gauge and the yarn size. For example, a 13 gauge knit using a 210 denier yarn may have an open area of between 30 and 40% on average. Figure 2 shows a simple knit pattern with a yarn (4) and a hole in the fabric indicated with (3). While figure 3 is showing a more intricate knitting pattern with a more 3 D knitted structure.

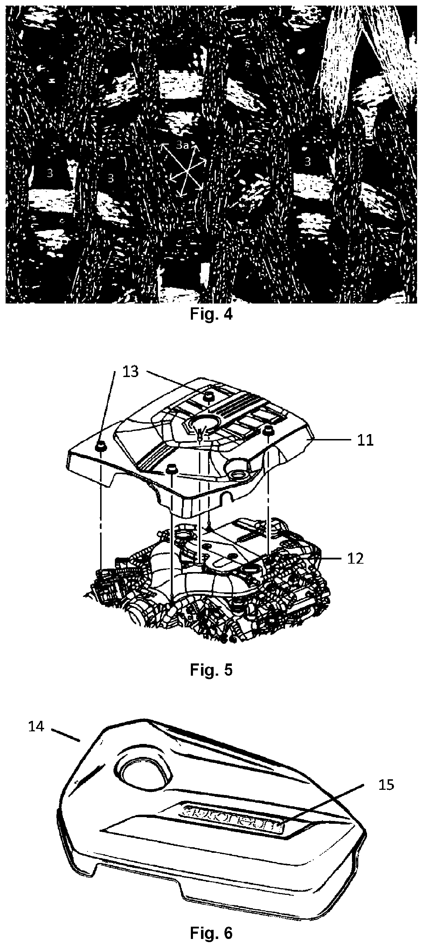

Figure 4 shows an enlarged picture of such a knitted structure comparable with figure 3 however made of 2 different colours yarn. Some of the holes in the fabric structure are indicated with 3. In addition, hole 3a shows an example for establishing the average hole size for such a fabric texture. As most of the holes formed in woven or knitted fabrics are not regular in structure. The cover factor for such a layer would be the area of the holes divided by the overall area measured. In this case roughly a cover factor of 74% would be given.

Figure 5 shows an example of an engine top cover (11) made of injection moulded plastic according to the state of the art together with the surface of the engine to be covered. The outer surface visible in use in the car is formed according to the design specification of the costumer and has mainly an aesthetic character. While the surface facing the engine is more bound to the boundaries of the form of the engine. The surface facing the component of the car, in this case the engine however this could also be the body in white or the bonnet is not always touching the trim part over the entire surface, in certain areas this is unwanted as the vibration of the component would then be taken over by the panel and would give rise to an additional source for vibrational noise as well as might impact the durability of the material.

Preferably the engine cover according to the invention is able to follow the contour of the engine surface with the adjacent surface, even if it might not touch it actually. At the same time the outer site of the cover follows a preferred aesthetic and or aerodynamic profile that is not necessary comparable with the surface directly covering the engine. Hence the cross section shows a variable thickness, and therefore a variable density in the materials used for the carrier layer and or absorbing layer to follow both requirements. In addition, the engine cover has a possible solution to mount the surface covering trim part to the surface to be covered, in this case using screws (13) that pass through the trim part and are screwed directly on the engine block.

Figure 6 shows a trim part according to the invention showing the site of the surface covered with the covering material according to the invention, including a surface embossment with a logo (14).

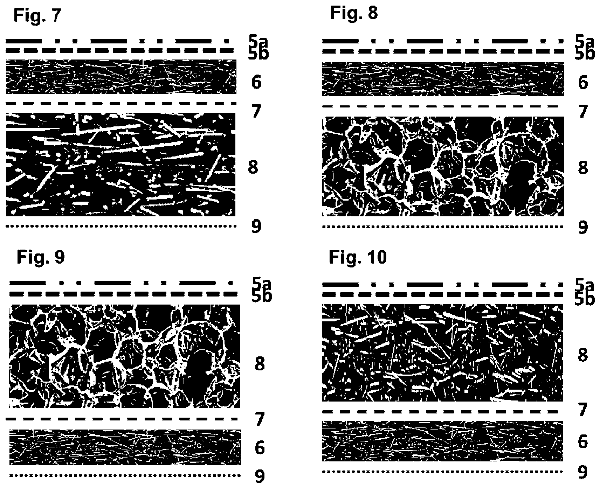

Figure 7 to 10 show preferred layouts for the material stacking according to the invention. The reference signs in these figures point to the same type of layer:
- 5a is the open structured fabric, for instance a knitted or woven fabric;
- 5b is the film layer, preferably the TPU film layer, which may be perforated;
- 6 is the carrier layer either in the form of a fibrous layer as shown in figure 7 to 10;
- 7 is an optional second film layer preferably also made of TPU;
- 8 is an optional absorbing layer. This layer can be either fibrous as shown in figure 7 or figure 10, or a foam layer as shown in figure 8 or 9.
- 9 is an optional scrim layer, for instance a nonwoven made of polyester material.

A layout in one preferred embodiment comprises of a multilayer surface material according to the invention with a textile fabric (5a) being one of a woven or knitted open structured fabric and a thermoplastic polyurethane film layer (5b). In addition, adjacent the film layer (5b) a carrier layer (6) in the form of a fibrous layer made of 30 to 80% glass fibers and 20 to 50% of polyamide binder fibers are used. Eventually the glass fibers can be replaced by up to 100% of cotton fibers and or polyester fibers as filling material. Preferably the polyester fibers used are Polyethylene terephthalate (PET). They may be preferably self-crimped fibers.

All layers will be laminated to adjacent layers during the moulding process.

The polyamide binder fibers will melt and form small droplets locally binding the glass fibers together, without impairing the airflow resistance of the fibrous material. Preferably the airflow resistance of the carrier layer after forming the part will be between 450 and 4000 Nsm⁻³. The density of this layer can be between 150 and 500 kg/m³.

Optionally an absorbing layer in the form of an open cell semi rigid polyurethane foam layer (8) (figure 6 or 9) or a second loftier fibrous layer (8) (figure 7 or 10) may be used. For the loftier fibrous layer the same fibrous material as for the carrier layer might be used; however with a lower density or a material comprising the same polyamide fibrous binder but having a polyester and or cotton as the main structural fibers. For the foam layer the area weight and or thickness of the slab stock material might be adapted.

## Claims

1. Engine bay trim part or cladding comprising at least a carrier layer made of an acoustic porous material, consisting of a consolidated fibrous material consisting of fibres and a binder in the form of a thermoplastic binder or a thermoset binder, whereby the binder forms small binding points between the fibers to consolidate the fibrous material and whereby the fibres are at least one of thermoplastic fibers, preferably polyester fibers, preferably polyethylene-terephthalate (PET) or polybutylene terephthalate (PBT), and whereby the engine bay trim part or cladding further comprises a multilayer surface material consisting of 2 layers with a first outer layer being an open structured textile fabric and a second layer being a polymeric film layer superposed and laminated together such that the film layer is visible through the open structure of the textile layer laminated on at least one outer surface of the trim part such that the open textile fabric forms the most outer layer of the trim part, **characterised in that** at least part of the thermoplastic fibers used are self-crimped fibers, preferably conjugate fibers, more preferably hollow conjugate fibers..

2. Engine bay trim part or cladding according to claim 1, whereby the average diameter of the hole size of the open structure in the textile fabric, measured using image analysis, is between 50 and 2000µm, preferably between 50 and 700µm.

3. Engine bay trim part or cladding according one of the preceding claims whereby the textile fabric has an average fabric cover factor, defined as the ratio of the fabric area covered by the yarn to the total fabric area, of between 60 and 99%.

4. Engine bay trim part or cladding according to one of the preceding claims whereby the textile fabric is made of a thermoplastic material with a melting temperature of at least 220°C, preferably made of polyester, more preferably made of polyethylene terephthalate (PET) or polybutylene terephthalate (PBT).

5. Engine bay trim part or cladding according to one of the preceding claims whereby the outer layer is either one of a knitted or woven fabric.

6. Engine bay trim part or cladding according to one of the preceding claims whereby the film layer is thermoplastic polyurethane (TPU).

7. Engine bay trim part or cladding according to one of the preceding claims whereby the film layer is a least partially perforated.

8. Engine bay trim part or cladding according to one of the preceding claims whereby the film layer has a thickness of between 20 and 150µm, more preferably between 25 and 80µm.

9. Engine bay trim part according to one of the preceding claims whereby the fibres further comprise at least one of natural fibers, preferably cotton or flax fibers, or mineral fibers, preferably glass fibers, carbon, ceramic or basalt fibers or a mixture of such fibers.

10. Engine bay trim part according to one of the preceding claims, whereby the thermoplastic binder is either a copolymer of polyester, or polyamide or whereby the thermoset binder is a resinous type preferably phenolic resin.

11. Engine bay trim part according to one of the preceding claims further comprising an acoustic absorbing layer, preferably a fibrous layer or an open cell foam layer.

12. Engine bay trim part according to one of the preceding claims further comprising a film layer between the carrier layer and the absorbing layer which is permeable or becomes permeable during the moulding of the part, preferably a thermoplastic polyurethane film layer.

13. Engine bay trim part according to claim 12 wherein the film layer between the carrier layer and the absorbing layer is one of polyamide (PA), for instance PA6 or PA66, polyester, PET or PBT or a copolymer of polyester, a polyolefin, like polyethylene (PE) or polypropylene (PP) or thermoplastic polyurethane (TPU), preferably the ester or ether based version or a bilayer or multilayer film.

## Patentansprüche

1. Motorraum-Verkleidungsteil oder -Umhüllung, umfassend mindestens eine Trägerschicht, die aus einem akustischen, porösen Material hergestellt ist, bestehend aus einem konsolidierten Fasermaterial, das aus Fasern und einem Bindemittel in der Form eines thermoplastischen Bindemittels oder eines duromeren Bindemittels besteht, wobei das Bindemittel kleine Bindungspunkte zwischen den Fasern bildet, um das Fasermaterial zu konsolidieren und wobei die Fasern mindestens eine Art von Thermoplastfasern, bevorzugt Polyesterfasern, bevorzugt Polyethylen-Terephthalat (PET) oder PolybutylenTerephthalat (PBT) sind, und wobei das Motorraum-Verkleidungsteil oder die -Umhüllung weiter ein Mehrschicht-Oberflächenmaterial umfasst, das aus 2 Schichten besteht, wobei eine erste Außenschicht ein offenes, strukturiertes Textilgewebe ist und eine zweite Schicht eine Polymerfilmschicht ist, die so überlagernd und zusammen laminiert sind, dass die Filmschicht durch die offene Struktur der Textilschicht sichtbar ist, die an mindestens einer Außenfläche des Verkleidungsteils derart laminiert ist, so dass das offene Textilgewebe die äußerste Schicht des Verkleidungsteil bildet, **dadurch gekennzeichnet, dass** mindestens ein Teil der verwendeten Thermoplastfasern selbstgekräuselte Fasern sind, bevorzugt Konjugatfasern, bevorzugter hohle Konjugatfasern.

2. Motorraum-Verkleidungsteil oder -Umhüllung nach Anspruch 1, wobei der durchschnittliche Durchmesser der Lochgröße der offenen Struktur in dem Textilgewebe, gemessen unter Verwendung einer Bildanalyse, zwischen 50 und 2000 µm, bevorzugt zwischen 50 und 700 µm liegt.

3. Motorraum-Verkleidungsteil oder -Umhüllung nach einem der vorstehenden Ansprüche, wobei das Textilgewebe einen durchschnittlichen Gewebeabdeckfaktor, der als das Verhältnis des vom Gewebebereich, der vom Garn abgedeckt ist, zum Gesamtgewebebereich definiert ist, von zwischen 60 und 99 % aufweist.

4. Motorraum-Verkleidungsteil oder -Umhüllung nach einem der vorstehenden Ansprüche, wobei das Textilgewebe aus einem Thermoplastmaterial mit einer Schmelztemperatur von mindestens 220 °C hergestellt ist, bevorzugt aus Polyester hergestellt ist, bevorzugter aus Polyethylen-Terephthalat (PET) oder PolybutylenTerephthalat (PBT) hergestellt ist.

5. Motorraum-Verkleidungsteil oder -Umhüllung nach einem der vorstehenden Ansprüche, wobei die Außenschicht entweder ein Gewirke oder ein Fasergewebe ist.

6. Motorraum-Verkleidungsteil oder -Umhüllung nach einem der vorstehenden Ansprüche, wobei die Filmschicht Thermoplastisches Polyurethan (TPU) ist.

7. Motorraum-Verkleidungsteil oder -Umhüllung nach einem der vorstehenden Ansprüche, wobei die Filmschicht mindestens teilweise perforiert ist.

8. Motorraum-Verkleidungsteil oder -Umhüllung nach einem der vorstehenden Ansprüche, wobei die Filmschicht eine Dicke von zwischen 20 und 150 µm, bevorzugter zwischen 25 und 80 µm aufweist.

9. Motorraum-Verkleidungsteil oder -Umhüllung nach einem der vorstehenden Ansprüche, wobei die Fasern weiter mindestens eines von natürlichen Fasern, bevorzugt Baumwolle oder Flachsfasern, oder Mineralfasern, bevorzugt Glasfasern, Kohlenstoff-, Keramik- oder Basaltfasern, oder ein Gemisch aus solchen Fasern, umfassen.

10. Motorraum-Verkleidungsteil oder -Umhüllung nach einem der vorstehenden Ansprüche, wobei das thermoplastischeBindemittel entweder ein Copolymer von Polyester oder Polyamid ist oder wobei das Duromerbindemittel ein harzhaltiger Typ, bevorzugt Phenolharz, ist.

11. Motorraum-Verkleidungsteil oder -Umhüllung nach einem der vorstehenden Ansprüche, weiter umfassend eine Akustik absorbierende Schicht, bevorzugt eine Faserschicht oder eine offenzellige Schaumstoffschicht.

12. Motorraum-Verkleidungsteil oder -Umhüllung nach einem der vorstehenden Ansprüche, weiter umfassend eine Filmschicht zwischen der Trägerschicht und der absorbierenden Schicht, die durchlässig ist oder während dem Formen des Bauteils durchlässig wird, bevorzugt eine Thermoplastische Polyurethan Filmschicht.

13. Motorraum-Verkleidungsteil oder -Umhüllung nach Anspruch 12, wobei die Filmschicht zwischen der Trägerschicht und der absorbierenden Schicht eine aus Polyamid (PA), beispielsweise PA6 oder PA66, Polyester, PET oder PBT oder ein Copolymer von Polyester, ein Polyolefin, wie z. B. Polyethylen (PE) oder Polypropylen (PP) oder Thermoplastisches Polyurethan (TPU), bevorzugt der auf Ester oder Ether basierende Typ, oder ein Doppelschicht- oder Mehrschichtfilm ist.

## Revendications

1. Partie de garniture ou de revêtement de compartiment moteur comprenant au moins une couche de support fait d'un matériau poreux acoustique, consistant en un matériau fibreux consolidé consistant en des fibres et un liant sous la forme d'un liant thermoplastique ou d'un liant thermodurcissable, selon lesquels le liant forme de petits points de liage entre les fibres pour consolider le matériau fibreux et selon lesquels les fibres sont au moins une des fibres thermoplastiques suivantes, de préférence polyester, de préférence un polyéthylène téréphtalate (PET) ou un polybutylène téréphtalate (PBT), et selon lesquels les parties de garniture ou de revêtement de compartiment moteur comprennent en outre un matériau de surface multi-couches consistant en 2 couches avec une première couche extérieure présentant un tissu textile à structure ouverte et une seconde couche qui est une couche de film polymère superposées et stratifiées ensemble de telle sorte que la couche de film soit visible à travers la structure ouverte de la couche textile stratifiée sur au moins une surface extérieure de la partie garniture de telle sorte que le tissu textile ouvert forme la couche la plus extérieure de la partie garniture, **caractérisée en ce qu'**au moins une partie des fibres thermoplastiques utilisées sont des fibres à auto-ondulation, de préférence des fibres conjuguées, plus préférentiellement des fibres conjuguées creuses.

2. Partie de garniture ou de revêtement de compartiment moteur selon la revendication 1, **caractérisée en ce que** le diamètre moyen de la taille de trou de la structure ouverte dans le tissu textile, mesuré à l'aide d'une analyse d'image, est entre 50 et 2000µm, de préférence entre 50 et 700µm.

3. Partie de garniture ou de revêtement de compartiment moteur selon l'une des revendications précédentes, **caractérisée en ce que** le tissu textile présente un facteur de couverture de tissu moyen, défini comme le rapport de la superficie de tissu couvert par le fil à la superficie de tissu totale, entre 60 et 99%.

4. Partie de garniture ou de revêtement de compartiment moteur selon l'une des revendications précédentes, **caractérisée en ce que** le tissu textile est fait d'un matériau thermoplastique avec une température de fusion d'au moins 220 C, de préférence fait de polyester, plus préférentiellement fait de polyéthylène téréphtalate (PET) ou polybutylène téréphtalate (PBT).

5. Partie de garniture ou de revêtement de compartiment moteur selon l'une des revendications précédentes, **caractérisée en ce que** la couche extérieure est un tissu tricoté ou tissé.

6. Partie de garniture ou de revêtement de compartiment moteur selon l'une des revendications précédentes, **caractérisée en ce que** la couche de film est un polyuréthanne thermoplastique (TPU).

7. Partie de garniture ou de revêtement de compartiment moteur selon l'une des revendications précédentes, **caractérisée en ce que** la couche de film est au moins partiellement perforée.

8. Partie de garniture ou de revêtement de compartiment moteur selon l'une des revendications précédentes, **caractérisée en ce que** la couche de film présente une épaisseur entre 20 et 150µm, plus préférentiellement entre 25 et 80µm.

9. Partie de garniture de compartiment moteur selon l'une des revendications précédentes, **caractérisée en ce que** les fibres comprennent en outre au moins des fibres naturelles, de préférence des fibres de coton ou lin, ou des fibres minérales, de préférence des fibres de verre, des fibres de carbone, de céramique ou de basalte ou un mélange de ces fibres.

10. Partie de garniture de compartiment moteur selon l'une des revendications précédentes, **caractérisée en ce que** le liant thermoplastique est soit un copolymère de polyester, soit un polyamide ou **caractérisée en ce que** le liant thermodurcissable est une résine du type de préférence phénolique.

11. Partie de garniture de compartiment moteur selon l'une des revendications précédentes comprenant en outre une couche absorbante acoustique, de préférence une couche fibreuse ou une couche de mousse à cellules ouvertes.

12. Partie de garniture de compartiment moteur selon l'une des revendications précédentes comprenant en outre une couche de film entre la couche de support et la couche absorbante qui est perméable ou devient perméable durant le moulage de la partie, de préférence une couche de film de polyuréthanne thermoplastique.

13. Partie garniture de compartiment moteur selon la revendication 12 dans laquelle la couche de film entre la couche de support et la couche absorbante est en polyamide (PA), par exemple du PA6 ou du PA66, en polyester, du PET ou du PBT ou en copolymère de polyester, en polyoléfine, comme du polyéthylène (PE) ou du polypropylène (PP) ou en polyuréthanne thermoplastique (TPU), de préférence la version à base d'ester ou d'éther ou un film bicouche ou multi-couche.
